# EUROPÄISCHE PATENTANMELDUNG

(11) **EP 0 628 471 A1**
(43) Veröffentlichungstag der Anmeldung: **14.12.1994**
(21) Anmeldenummer: 94108748.8
(22) Anmeldetag: 08.06.1994
(51) Int. Cl.: B62H 3/00

(54) **Zweiradständer mit Diebstahlsicherung**

(30) Priorität: 11.06.1993 DE 4319307
(71) Anmelder: Bareis, Manfred, D-73527 Schwäbisch Gmünd (DE)
(72) Erfinder: Bareis, Manfred, D-73527 Schwäbisch Gmünd (DE)
(74) Vertreter: Weitzel, Wolfgang, Dr.-Ing. Patentanwalt

(57) **Zusammenfassung**

Die Erfindung betrifft einen Zweiradständer mit Diebstahlsicherung
mit einer im Gebrauchszustand stehenden Säule (1), deren Fuß am oder im Boden verankerbar ist;
mit einer an der Säule vorgesehenen Anlagefläche zum Anlegen des Zweirades in dessen abgestelltem Zustand.

Die Erfindung ist gekennzeichnet durch die folgenden Merkmale:
an der Säule sind zwei Bügel (4,5) gelenkig befestigt, die jeweils mit ihrem einen Ende an der Säule (1) angelenkt, zum Zwecke der Zweiradsicherung um einen Gelenkpunkt schwenkbar und dabei durch jeweils das Vorderrad bzw. Hinterrad des Zweirades hindurchführbar sind, um einen geschlossenen Vollbogen zu bilden;
es ist ein Schloß zum Verriegeln der beiden Bügel in ihrer geschlossenen Position vorgesehen.

## Beschreibung

Die Erfindung betrifft einen Zweiradständer mit Diebstahlsicherung. Auf den Oberbegriff von Anspruch 1 wird verwiesen.

Der Anschaffungswert von Fahrrädern ist in den letzten Jahren stark angestiegen. Gleichzeitig haben auch Diebstahlvergehen in erheblichem Maße zugenommen.

Es gibt eine Vielzahl von Sicherungsvorrichtungen, um Diebstahl zu erschweren oder zu unterbinden. Zum einen sind jene Sicherungen zu nennen, die am Zweirad selbst angebracht sind. Diese haben den Nachteil, daß das Zweirad weggetragen oder weggefahren werden kann, samt der Diebstahlsicherung.

Andere Maßnahmen zur Diebstahlsicherung beruhen darauf, das Zweirad in irgendeiner Weise an einen festen Gegenstand zu befestigen, beispielsweise durch eine Kette, ein Seil, einen Schnappbügel oder dergleichen. Diese Vorrichtungen haben den Nachteil, daß sie entweder durchtrennt werden können, beispielsweise mittels Bolzenschneidern, oder daß sie umständlich in der Handhabung sind. Auch beide Nachteile werden gleichzeitig angetroffen.

Die Erfindung geht aus von einem Zweiradständer, der fest eingebaut ist, beispielsweise vor öffentlichen Gebäuden, auf öffentlichen Straßen und Plätzen oder dergleichen, und der zunächst einmal dazu dient, ein Zweirad abzustellen und dabei anzulehnen. Derartige Zweiradständer haben üblicherweise eine senkrecht stehende Säule, deren Fuß am Boden oder im Boden verankert ist, ferner weisen sie im allgemeinen eine Anlagefläche zum Anlegen und damit zum Anlehnen des Zweirades in dessen aufgestelltem Zustand auf. Dabei muß der Benutzer des Zweirades die eigentliche Diebstahlsicherungseinrichtung, beispielsweise eine Kette oder ein Seil, meist mit sich führen, um diese an Ort und Stelle zu verwenden.

Der Erfindung liegt die Aufgabe zugrunde, einen Zweiradständer derart zu gestalten, daß die Diebstahlsicherungsvorrichtung gleich integriert ist, so daß sie der Zweiradbenutzer nicht mit sich führen muß, daß das Zweirad stehend durch einfaches Anlehnen an den Ständer abgestellt werden kann, ohne daß es eines Hochbockens bedarf, daß die integrierte Diebstahlsicherung einfach und zuverlässig arbeitet und nicht durch Manipulationen oder Gewalteinwirkung gelöst werden kann, und daß sie schließlich auch das Zweirad nicht beschädigt oder verkratzt.

Diese Aufgabe wird durch die kennzeichnenden Merkmale von Anspruch 1 gelöst.

Demgemäß werden somit an der Säule des Zweiradständers zwei Bügel gelenkig befestigt, die jeweils mit ihrem einen Ende an der Säule angelenkt, und zum Zwecke der Sicherung des Zweirades um einen Gelenkpunkt verschwenkbar und hierbei durch jeweils das Vorderrad bzw. Hinterrad des Zweirades hindurchführbar sind, um einen geschlossenen Vollbogen zu bilden; weiterhin wird ein Schloß zum Verriegeln der beiden Bügel in ihrer geschlossenen Position vorgesehen. Das Schloß kann von jeder brauchbaren Art sein. Es kommen vor allem Schlösser in Betracht, die mit Parkchips oder Wertmünze bedienbar sind, aber auch mit Geldmünzen.

Am besten sind die Bügel um ein und denselben Mittelpunkt schwenkbar, der sich an der Säule befindet und mit deren Längsachse zusammenfällt. Weiterhin ist es zweckmäßig, die Bügel in einer Horizontalebene anzuordnen, so daß sie leicht durch die Räder - jeweils zwischen den Speichen - hindurchgeführt werden können.

Um ein sicheres Hindurchführen der freien Enden der Bügel durch die Räder zu ermöglichen, kommt es auf die Form der Bügel an. Die Bügel sind jeweils für sich alleine im wesentlichen halbkreisförmig. Der vordere Teil, d.h. der erste Quadrant dieses Halbkreises eines jeden Bügels sollte weitgehend eine echte Kreisform haben.

Die Erfindung ist anhand der Zeichnung näher erläutert. Darin ist im einzelnen folgendes dargestellt:
Figur 1 zeigt einen Fahrradständer mit Fahrrad in abgestelltem und befestigten Zustand, von der Seite her gesehen.
Figur 2 zeigt die Gegenstände von Figur 1 in einer Ansicht von vorn.
Figur 3 zeigt eine Draufsicht auf den Zweiradständer mit Diebstahlsicherung, wobei das Fahrrad in Phantomlinien gezeigt ist.
Figur 4 zeigt eine Einzelheit X aus Figur 3 in vergrößertem Maßstab.
Figur 5 zeigt den Gegenstand von Figur 4 in Richtung der Pfeile V-V.
Figur 6 ist eine weitere Ansicht analog jener gemäß Figur 3 mit Einzelheit Y.
Die Figuren 7 und 8 zeigen die Einzelheit Y in vergrößerter Darstellung.

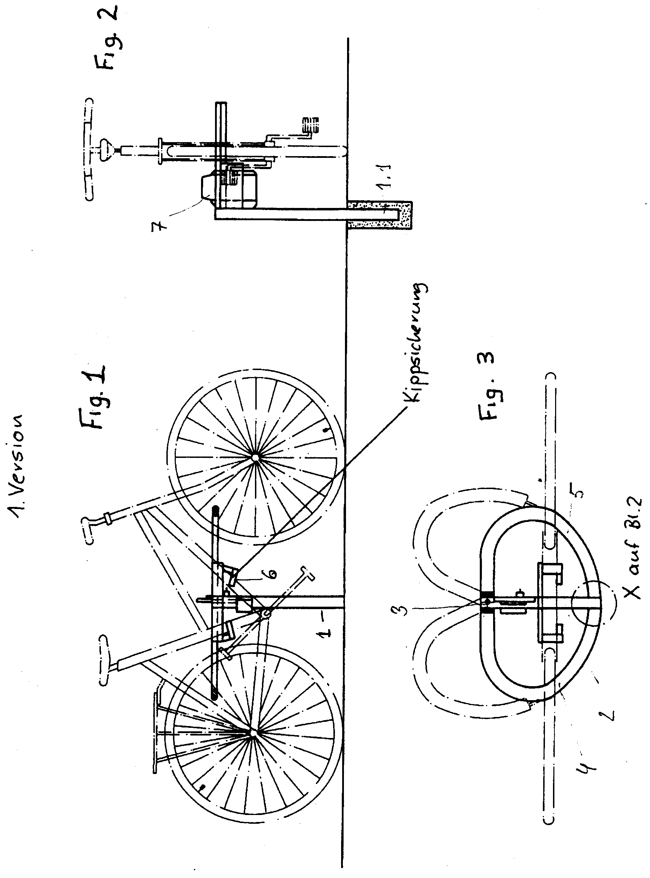

Wie man aus den Figuren 1 und 2 erkennt, umfaßt der dargestellte Zweiradständer mit Diebstahlsicherung eine vertikale Säule 1, die mit ihrem Fuß 1.1 im Boden einzementiert ist. Am oberen Ende der Säule 1 ist ein Stab 2 befestigt, wobei Säule 1 und Stab 2 gemeinsam ein L bilden. Außerdem sind am oberen Ende der Säule 1 an einem Gelenk 3 zwei Bügel 4, 5 angelenkt. Wie man besonders gut aus Figur 3 erkennt, sind diese Bügel um den Gelenkpunkt 3 als Mittelpunkt schwenkbar. Die Darstellung zeigt in ausgezogenen Linien die beiden Bügel in geschlossenem Zustand, wobei sie einen Vollbogen bilden, und in Phantomlinien in geöffnetem Zustand. Wie man ferner aus Figur 3 erkennt, greift Bügel 4 zwischen den Speichen des Hinterrades durch dieses hindurch und Bügel 5 zwischen den Speichen durch das Vorderrad. Aus Figur 1 erkennt man weiterhin eine Kippsicherung 6. Aus Figur 2 erkennt man ein Wertmarkenschloß 7, im vorliegenden Falle mit Behälter für die Wertmarke. Es versteht sich, daß das Schloß auch ohne Behälter ausgeführt sein kann.

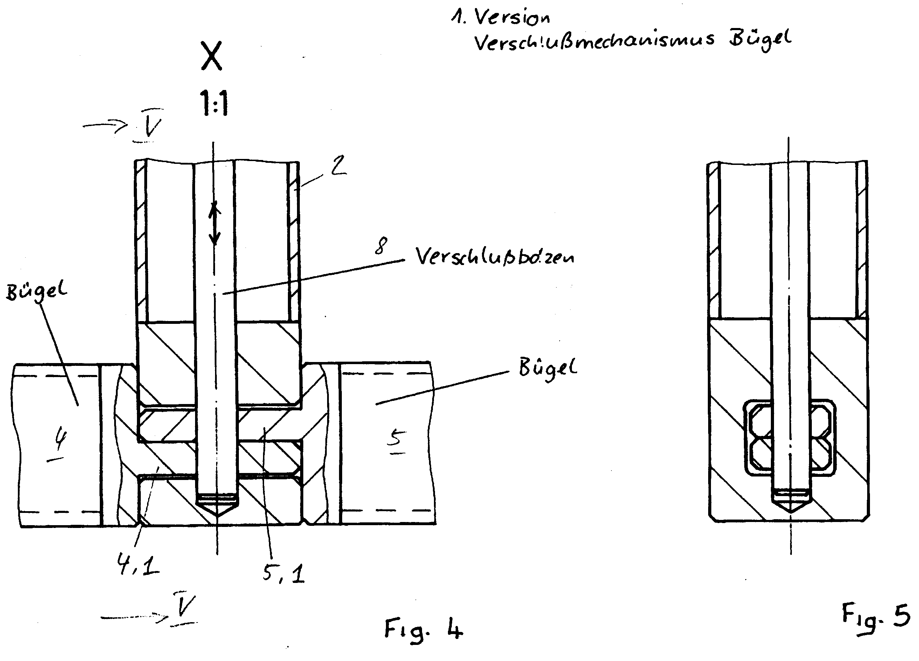

Aus den Figuren 4 und 5 erkennt man die Art und Weise, wie die Verriegelung der Bügel 4, 5 in geschlossenem Zustand vor sich geht. Stab 2 ist hülsenförmig. In ihm ist ein zu ihm selbst koaxialer Verschlußbolzen 8 angeordnet, der in Richtung des Doppelpfeiles beim Schließen und Öffnen des Schlosses 7 bewegbar ist. In geschlossenem Zustand greift das freie Ende des Verschlußbolzens 8 durch entsprechende Bohrungen hindurch, die sich in Fortsätzen 4.1 bzw. 5.1 der Bügel 4 bzw. 5 befinden. Die Verriegelung befindet sich bei dieser Ausführungsform somit im Bereich der freien Enden der Bügel.

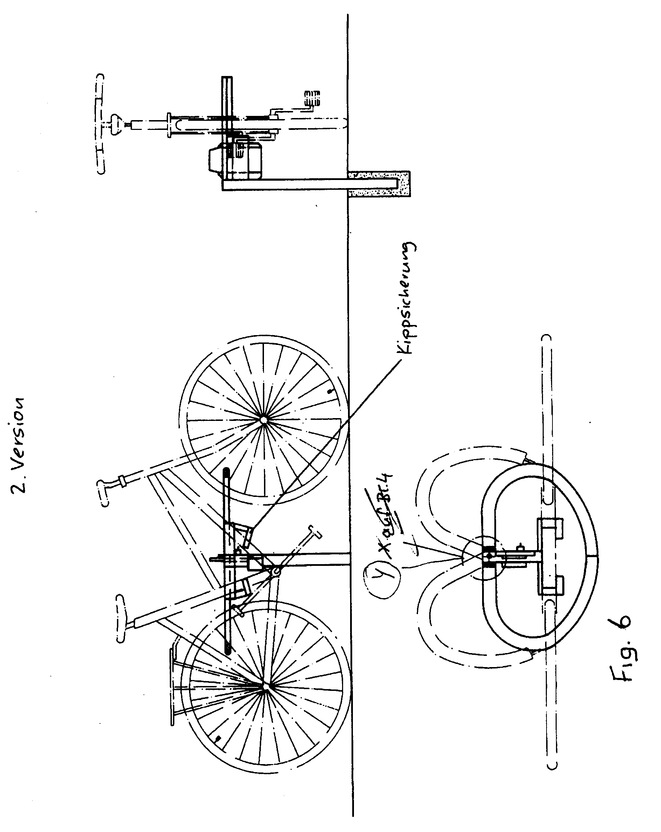

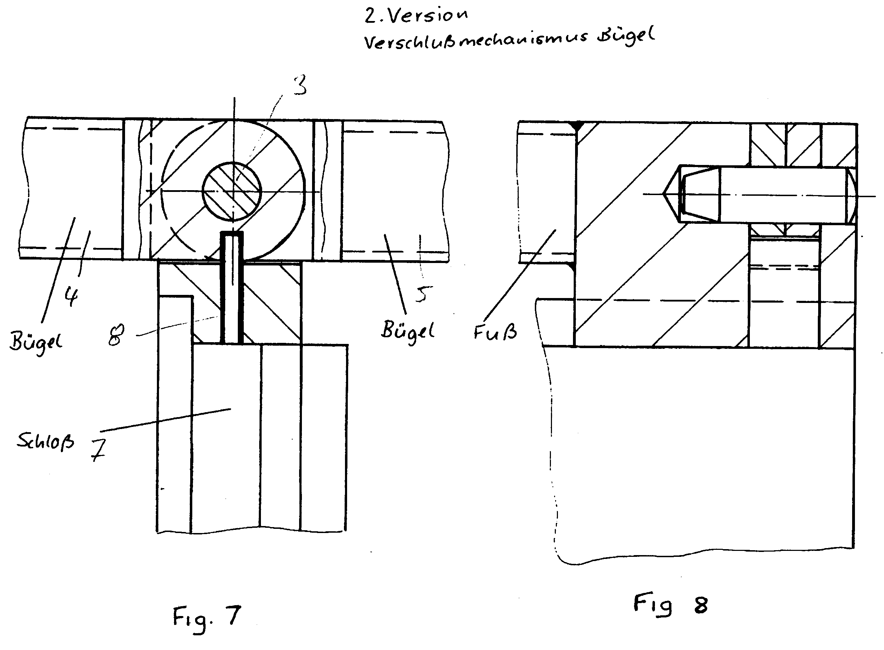

Alternativ hierzu kann die Verriegelung auch im Bereich des Gelenkes 3 vorgesehen sein. Siehe die alternative Ausführungsform gemäß der Figuren 6 - 8. Der Einfachheit halber sind die gleichen Elemente mit denselben Bezugszeichen versehen. Wie man aus Figur 7 erkennt, wird der Verschlußbolzen 8 des Schlosses 7 in das Gelenk selbst eingeschoben.

Zum besseren Bedienungskomfort können die beiden Bügel bezüglich ihrer Schwenkbewegung derart miteinander gekoppelt sein, daß sie nur synchron ihre Schwenkbewegung ausführen. Dies kann beispielsweise durch eine gegenseitige Verzahnung im Gelenkbereich vorgenommen werden. Dies ist jedoch im einzelnen nicht dargestellt.

## Patentansprüche

1. Zweiradständer mit Diebstahlsicherung
1.1 mit einer im Gebrauchszustand stehenden Säule (1), deren Fuß (1.1) am oder im Boden verankerbar ist;
1.2 mit einer an der Säule (1) vorgesehenen Anlagefläche zum Anlegen des Zweirades in dessen abgestelltem Zustand;
gekennzeichnet durch die folgenden Merkmale:
1.3 an der Säule (1) sind zwei Bügel (4, 5) gelenkig befestigt, die jeweils mit ihrem einen Ende an der Säule (1) angelenkt, zum Zwecke der Zweiradsicherung um einen Gelenkpunkt schwenkbar und dabei durch jeweils das Vorderrad bzw. Hinterrad des Zweirades hindurchführbar sind, um einen geschlossenen Vollbogen zu bilden;
1.4 es ist ein Schloß (7) zum Verriegeln der beiden Bügel (4, 5) in ihrer geschlossenen Position vorgesehen.

2. Zweiradständer nach Anspruch 1, dadurch gekennzeichnet, daß die beiden Bügel (4, 5) um denselben Mittelpunkt (3) schwenkbar sind.

3. Zweiradständer nach Anspruch 1 oder 2, dadurch gekennzeichnet, daß die beiden Bügel (4, 5) im wesentlichen in einer Horizontalebene angeordnet sind.

4. Zweiradständer nach einem der Ansprüche 1-3, dadurch gekennzeichnet, daß jeweils die beiden vorderen Hälften der beiden Bügel (4, 5) wenigstens annähernd einen Kreisbogen bilden.

5. Zweiradständer nach einem der Ansprüche 1-4, dadurch gekennzeichnet, daß die Säule (1) einen frei auskragenden Stab (2) trägt, an dem eine die Anlagefläche aufweisende Platte befestigt ist.

6. Zweiradständer nach Anspruch 5, dadurch gekennzeichnet, daß der Stab (2) das Schloß (7) trägt, und daß das Schloß (7) im Zwischenraum zwischen Säule (1) und Platte angeordnet ist.

7. Zweiradständer nach einem der Ansprüche 5 oder 6, dadurch gekennzeichnet, daß die freien Enden der Bügel (4, 5) beim Schließen in das freie Ende des Stabes (2) einschiebbar sind.

8. Zweiradständer nach Anspruch 7, dadurch gekennzeichnet, daß das Schloß (7) einen Verschlußbolzen aufweist, der innerhalb des Stabes (2) und in dessen Längsrichtung verschiebbar ist, und im Schließzustand durch jeweils eine Bohrung in den freien Enden der Bügel hindurchgreift.

9. Zweiradständer nach einem der Ansprüche 1-5, dadurch gekennzeichnet, daß das Schloß (7) einen Verschlußbolzen (8) aufweist, der jeweils in den Gelenkbereich in die beiden angelenkten Enden der Bügel einschiebbar ist, um diese gegenseitig zu verriegeln.

10. Vorrichtung nach einem der Ansprüche 1-9, dadurch gekennzeichnet, daß das Schloß ein parkchipbetätigbares Schloß ist.
